# EUROPÄISCHE PATENTSCHRIFT

(11) **EP 1 542 485 B1**
(45) Veröffentlichungstag und Bekanntmachung des Hinweises auf die Patenterteilung: **21.06.2006**
(21) Anmeldenummer: 03405891.7
(22) Anmeldetag: 11.12.2003
(51) Int. Cl.: H04Q 7/32, H04Q 7/34

(54) **System, Verfahren und Vorrichtungen zur Fernbetreuung von Teilnehmern in einem Mobilfunknetz**
System, method and devices for remote support of subscribers in a mobile network
Système, procédé et appareils pour assistance à distance d'abonnés dans un réseau mobile

(43) Veröffentlichungstag der Anmeldung: 15.06.2005
(73) Patentinhaber: Swisscom AG, 3000 Bern 29 (CH)
(72) Erfinder: Riordan, John, 3006 Bern (CH); Schürch, Urs, 3627 Heimberg (CH)
(74) Vertreter: BOVARD AG

(56) Entgegenhaltungen:
- WO-A-01/95652
- WO-A-98/38823
- US-A1- 2003 064 719
- US-A1- 2003 139 175
- LI S F ET AL: "A framework to integrate synchronous and asynchronous collaboration" ENABLING TECHNOLOGIES: INFRASTRUCTURE FOR COLLABORATIVE ENTERPRISES, 1998. (WET ICE '98). PROCEEDINGS., SEVENTH IEEE INTERNATIONAL WORKSHOPS ON STANFORD, CA, USA 17-19 JUNE 1998, LOS ALAMITOS, CA, USA,IEEE COMPUT. SOC, US, 17. Juni 1998 (1998-06-17), Seiten 96-101, XP010312201 ISBN: 0-8186-8751-7

## Beschreibung

### Technisches Gebiet

Die vorliegende Erfindung betrifft ein System, ein Verfahren und Vorrichtungen zur Fernbetreuung von Teilnehmern in einem Mobilfunknetz. Die vorliegende Erfindung betrifft insbesondere ein System, ein Verfahren und Vorrichtungen zur Fernbetreuung von Teilnehmern in einem Mobilfunknetz, welche Teilnehmer jeweils über ein mobiles Kommunikationsendgerät verfügen, das eine Anzeige umfasst und über das Mobilfunknetz mit einer computerbasierten Betreuungseinheit verbindbar ist.

### Stand der Technik

Zur Betreuung von Teilnehmern in einem Mobilfunknetz werden von den Netzbetreibern Betreuungszentren eingerichtet, die von den Teilnehmern telefonisch kontaktiert werden können. Um Teilnehmern insbesondere bei der Bedienung und Konfiguration ihrer mobilen Kommunikationsendgeräte behilflich zu sein, weisen Hilfspersonen der Betreuungszentren die Teilnehmer an, mittels der Bedienungselemente der mobilen Kommunikationsendgeräte gewisse Operationen auszuführen und darüber zu berichten, was als Reaktion auf die Operationen passiert. Insbesondere sollen die hilfesuchenden Teilnehmer über den aktuellen Bildinhalt informieren, der dem Betriebszustand des mobilen Kommunikationsendgeräts entsprechend auf der Anzeige des mobilen Kommunikationsendgeräts dargestellt ist.

Die Betreuungszentren umfassen programmierte Softwaremodule, so genannte Emulatoren, welche wahlweise die verschiedenen verfügbaren mobilen Kommunikationsendgeräte emulieren können. Dabei wird jeweils ein ausgewählter Typ eines mobilen Kommunikationsendgeräts mit seinen Bedienungselementen und seiner Anzeige im Betreuungszentrum auf einem Bildschirm dargestellt. Die dargestellten Bedienungselemente eines emulierten mobilen Kommunikationsendgeräts sind durch eine Hilfsperson des Betreuungszentrums bedienbar. Die Emulatoren bestimmen den Betriebszustand eines emulierten mobilen Kommunikationsendgeräts abhängig von den betätigten Bedienungselementen, vom Typ und von der Konfiguration des emulierten mobilen Kommunikationsendgeräts. Die Emulation der mobilen Kommunikationsendgeräte erleichtert den Hilfspersonen einerseits, den hilfesuchenden Teilnehmern korrekte Anweisungen zu geben, und andererseits, die von den Teilnehmern rapportierten Reaktionen, insbesondere die beschriebenen Bildinhalte mit den emulierten Reaktionen, insbesondere mit den emulierten Bildinhalten, zu vergleichen. Die Nachteile dieser Betreuungszentren bestehen insbesondere darin, dass keine Gewähr besteht, dass ein hilfesuchender Teilnehmer die Bedienungselemente wie angewiesen betätigt, respektive die angewiesenen Operationen ausführt, oder dass der hilfesuchende Teilnehmer verständlich und korrekt über die Reaktionen berichtet, respektive die aktuellen Bildinhalte beschreibt. Missverständnisse und Unklarheiten zwischen einer Hilfsperson und einem hilfesuchenden Teilnehmer verlängern die Betreuungszeiten unnötig und können eine erfolgreiche Betreuung sogar verhindern.

Die Offenlegungsschrift WO 01/95652 A1 beschreibt ein Verfahren zur Betreuung von mobilen Kommunikationsvorrichtungen. Basierend auf einer Betreuungsanfrage der mobilen Kommunikationsvorrichtung, wobei sich die Betreuungsanfrage auf eines oder mehrere Probleme bezieht, wird eine Betreuungsmeldung an ein Betreuungszentrum übermittelt. Basierend auf einer Auswertung der Betreuungsmeldung wird vom Betreuungszentrum eine Betreuungsinformation erzeugt und an die mobile Kommunikationsvorrichtung übermittelt, wobei eines oder mehrere der genannten Probleme zumindest teilweise gelöst werden. Es ist insbesondere ein Nachteil dieses Verfahrens, dass eine Auswertung der Betreuungsmeldung zu nicht optimalen Betreuungsinformationen führen kann und es ist insbesondere ein Nachteil dieses Verfahrens, dass es für die Betreuungszentrale nicht überprüfbar ist, in welchem Ausmass genannte Probleme durch die Betreuungsinformationen gelöst werden.

Das Dokument "A Framework to Integrate Synchronous and Asynchronous Collaboration", IEEE 1998, Seite 96 bis 101, S.F. Li et al., beschreibt Systeme für die Zusammenarbeit geographisch getrennter Personen. Es wird ein computerbasiertes System beschrieben, mit welchem mehrere Personen Text- und/oder Grafikdokumente gemeinsam bearbeiten können. Es wird zudem ein computerbasiertes System beschrieben, mit welchem mehrere Personen ein Softwareprogramm gemeinsam bedienen können. Die Schritte der Zusammenarbeit können für alle beteiligten Personen aufgezeichnet werden und von diesen, beispielsweise nach einer Abwesenheit, asynchron abgespielt werden. Es ist insbesondere ein Nachteil dieses Systems, dass sehr hohe Netzwerkbandbreiten und Speicherkapazitäten erforderlich sind, insbesondere für die Übertragung und Speicherung von Daten welche die Zusammenarbeit betreffen.

### Darstellung der Erfindung

Es ist eine Aufgabe der vorliegenden Erfindung, ein neues System, ein neues Verfahren und neue Vorrichtungen zur Fernbetreuung von Teilnehmern in einem Mobilfunknetz vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Zur Fernbetreuung von Teilnehmern in einem Mobilfunknetz wird mindestens ein mobiles Kommunikationsendgerät eines Teilnehmers über das Mobilfunknetz mit einer computerbasierten Betreuungseinheit verbunden.

Die oben genannten Ziele werden durch die vorliegende Erfindung insbesondere dadurch erreicht, dass Bedienungsinstruktionen über das Mobilfunknetz zwischen der Betreuungseinheit und dem mobilen Kommunikationsendgerät übermittelt werden und dass das mobile Kommunikationsendgerät entsprechend den über das Mobilfunknetz übermittelten Bedienungsinstruktionen gesteuert wird. Zudem wird in der Betreuungseinheit ein Bildinhalt dargestellt, der dem Bildinhalt entspricht, der auf einer Anzeige des mobilen Kommunikationsendgeräts dargestellt ist. Dadurch, dass die Bedienungsinstruktionen, entsprechend welchen das mobile Kommunikationsendgerät gesteuert wird, zwischen der Betreuungseinheit und dem mobilen Kommunikationsendgerät ausgetauscht werden, wird gewährleistet, dass sowohl im mobilen Kommunikationsendgerät als auch in der Betreuungseinheit der Betriebszustand des mobilen Kommunikationsendgeräts respektive des emulierten mobilen Kommunikationsendgeräts basierend auf den selben Bedienungsinstruktionen bestimmt wird. Es wird insbesondere vermieden, dass der Betriebszustand des mobilen Kommunikationsendgeräts von Operationen eines Teilnehmers abhängt, die auf (mündlichen) Anweisungen einer Hilfsperson basieren. Dadurch, dass in der Betreuungseinheit der Bildinhalt dargestellt wird, der auf einer Anzeige des mobilen Kommunikationsendgeräts dargestellt ist und der dem Betriebszustand des mobilen Kommunikationsendgeräts entspricht, wird in der Betreuungseinheit ein Vergleich mit einem Bildinhalt ermöglicht, der dem Betriebszustand des emulierten mobilen Kommunikationsendgeräts entspricht. Dadurch wird folglich vermieden, dass die in der Betreuungseinheit emulierten Bildinhalte mit Bildinhalten verglichen werden müssen, die von einem entfernten Teilnehmer (mündlich) einer Hilfsperson beschrieben werden.

Vorzugsweise wird im mobilen Kommunikationsendgerät eine erste Prüfsumme eines auf der Anzeige des mobilen Kommunikationsendgeräts dem Betriebszustand des mobilen Kommunikationsendgeräts entsprechend dargestellten ersten Bildinhalts berechnet. In der Betreuungseinheit wird das mobile Kommunikationsendgerät emuliert, wobei ein dem Betriebszustand des emulierten mobilen Kommunikationsendgeräts entsprechender zweiter Bildinhalt emuliert wird. In der Betreuungseinheit wird eine zweite Prüfsumme des emulierten zweiten Bildinhalts berechnet und die erste Prüfsumme wird mit der zweiten Prüfsumme verglichen. Vom mobilen Kommunikationsendgerät wird mindestens ein Teilgebiet des ersten Bildinhalts über das Mobilfunknetz an die Betreuungseinheit übermittelt, wenn die erste Prüfsumme und die zweite Prüfsumme nicht übereinstimmen. Dadurch, dass Bildinhalte nur dann vom mobilen Kommunikationsendgerät an die Betreuungseinheit übermittelt werden, wenn Unterschiede zwischen den Bildinhalten, die auf der Anzeige des mobilen Kommunikationsendgeräts dargestellt werden, und den Bildinhalten, die durch die Betreuungseinheit emuliert werden, festgestellt werden, wird das Mobilfunknetz nicht unnötig durch die Übermittlung von Bildinhalten vom mobilen Kommunikationsendgerät an die Betreuungseinheit belastet. Zudem ist es auch möglich, bloss ein Teilgebiet der Bildinhalte zu übermitteln, beispielsweise bloss das Teilgebiet mit Unterschieden zu den emulierten Bildinhalten, so dass die für die Übermittlung der Bildinhalte beanspruchte Bandbreite des Mobilfunknetzes weiter reduziert werden kann. Überdies werden die Bildinhalte vorzugsweise komprimiert übermittelt.

In einer Ausführungsvariante wird die Berechnung der ersten Prüfsumme im mobilen Kommunikationsendgerät auf Grund einer Bedienungsinstruktion durchgeführt, die über Bedienungselemente des mobilen Kommunikationsendgeräts empfangen wurde. In dieser Ausführungsvariante werden die über die Bedienungselemente eingegebenen Bedienungsinstruktionen anschliessend zur Steuerung des emulierten mobilen Kommunikationsendgeräts vom mobilen Kommunikationsendgerät an die Betreuungseinheit übermittelt. Dadurch wird gewährleistet, dass sowohl im mobilen Kommunikationsendgerät als auch in der Betreuungseinheit der Betriebszustand des mobilen Kommunikationsendgeräts, respektive des emulierten mobilen Kommunikationsendgeräts, basierend auf den selben Bedienungsinstruktionen bestimmt wird, die vom Teilnehmer eingegeben werden. Allerdings werden dabei die Bedienungsinstruktionen typischerweise vom Teilnehmer gemäss Anweisungen der Hilfsperson eingegeben, wodurch Verzögerungen wegen Missverständnissen zwischen der Hilfsperson und dem Teilnehmer nicht völlig ausgeschlossen werden können.

Vorzugsweise wird die Berechnung der ersten Prüfsumme jedoch im mobilen Kommunikationsendgerät auf Grund einer Bedienungsinstruktion durchgeführt, die im mobilen Kommunikationsendgerät über das Mobilfunknetz von der Betreuungseinheit empfangen wurde. In dieser bevorzugten Ausführungsvariante werden die Bedienungsinstruktionen von einer Hilfsperson oder von einem entsprechenden Testprogramm in der Betreuungseinheit eingegeben, respektive erzeugt, und sowohl an das mobile Kommunikationsendgerät des Teilnehmers als auch an das emulierte Kommunikationsendgerät weitergeleitet. Da die gleichen Bedienungsinstruktionen sowohl an das mobile Kommunikationsendgerät des Teilnehmers als auch an das emulierte Kommunikationsendgerät geleitet werden, erübrigen sich diesbezügliche (mündliche) Anweisungen der Hilfsperson an den Teilnehmer und Missverständnisse können völlig ausgeschlossen werden.

In einer Ausführungsvariante wird die berechnete erste Prüfsumme vom mobilen Kommunikationsendgerät über das Mobilfunknetz an die Betreuungseinheit übermittelt und die erste Prüfsumme und die zweite Prüfsumme werden in der Betreuungseinheit miteinander verglichen. Wenn die erste Prüfsumme und die zweite Prüfsumme nicht übereinstimmen, übermittelt die Betreuungseinheit eine Bildübermittlungsinstruktion über das Mobilfunknetz an das mobile Kommunikationsendgerät und der erste Bildinhalt wird vom mobilen Kommunikationsendgerät auf Grund der empfangenen Bildübermittlungsinstruktion über das Mobilfunknetz an die Betreuungseinheit übermittelt.

Vorzugsweise wird die zweite Prüfsumme jedoch von der Betreuungseinheit über das Mobilfunknetz an das mobile Kommunikationsendgerät übermittelt und die erste Prüfsumme und die zweite Prüfsumme werden im mobilen Kommunikationsendgerät miteinander verglichen. Wenn die erste Prüfsumme und die zweite Prüfsumme nicht übereinstimmen, übermittelt das mobile Kommunikationsendgerät den ersten Bildinhalt über das Mobilfunknetz an die Betreuungseinheit. Dadurch, dass die Prüfsummen im mobilen Kommunikationsendgerät miteinander verglichen werden, brauchen von der Betreuungseinheit keine Bildübermittlungsinstruktion über das Mobilfunknetz an das mobile Kommunikationsendgerät übermittelt zu werden.

Neben einem System und einem Verfahren zur Fernbetreuung von Teilnehmern in einem Mobilfunknetz, betrifft die vorliegende Erfindung auch ein Computerprogrammprodukt, das ein computerlesbares Medium mit darin enthaltenen Computerprogrammcodemitteln zur Steuerung eines oder mehrerer Prozessoren einer computerbasierten Betreuungseinheit umfasst, sowie ein Computerprogrammprodukt, das ein computerlesbares Medium mit darin enthaltenen Computerprogrammcodemitteln zur Steuerung eines oder mehrerer Prozessoren eines mobilen Kommunikationsendgeräts umfasst.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein mobiles Kommunikationsendgerät darstellt, das über ein Mobilfunknetz mit einer computerbasierten Betreuungseinheit verbunden ist.
Figur 2 zeigt ein Zeitdiagramm, das schematisch einen möglichen Verfahrensablauf der Fernbetreuung des mobilen Kommunikationsendgeräts durch die computerbasierte Betreuungseinheit darstellt.

### Wege zur Ausführung der Erfindung

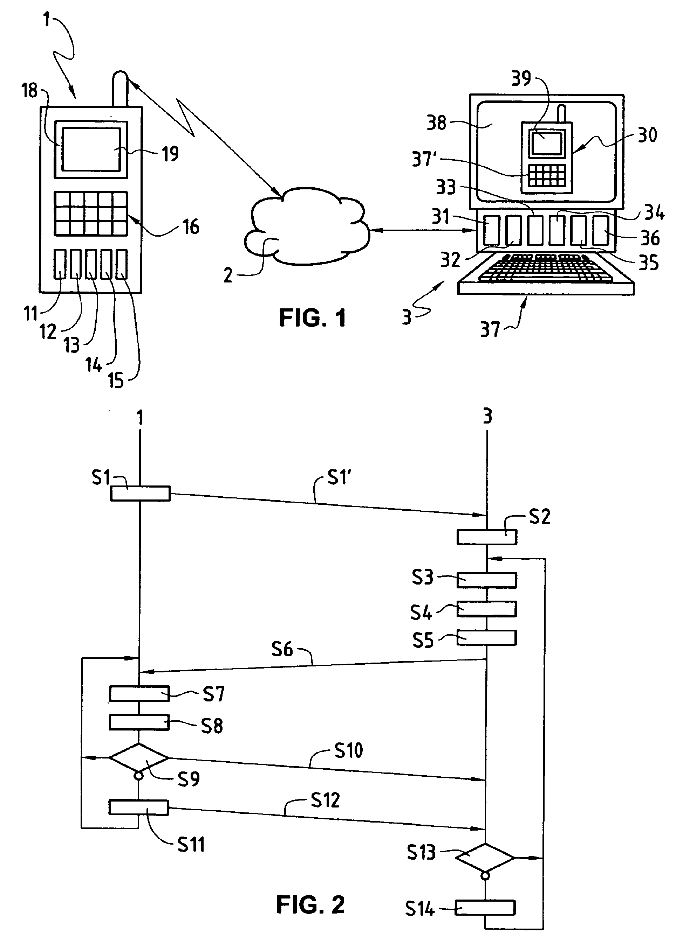

In den Figuren 1 und 2 werden einander entsprechende, gleiche Komponenten durch gleiche Bezugszeichen bezeichnet.

In der Figur 1 bezeichnet das Bezugszeichen 2 ein Mobilfunknetz, beispielsweise ein GSM- (Global System for Mobile Communication) oder ein UMTS-Netz (Universal Mobile Telephone System) oder ein anderes, beispielsweise satellitenbasiertes Mobilfunknetz, oder ein WLAN (Wireless Local Area Network).

In der Figur 1 bezeichnet das Bezugszeichen 1 ein mobiles Kommunikationsendgerät, beispielsweise ein Mobilfunktelefon oder einen Laptop- oder PDA-Computer (Personal Digital Assistant) mit einem Kommunikationsmodul 15 für die Kommunikation über das Mobilfunknetz 2. Das mobile Kommunikationsendgerät 1 umfasst eine Anzeige 18 zur Darstellung eines Bildinhalts 19 sowie Bedienungselemente 16 zur Eingabe von Daten und Bedienungsinstruktionen. Das mobile Kommunikationsendgerät 1 umfasst überdies verschiedene funktionale Module, die vorzugsweise als programmierte Softwaremodule zur Steuerung eines Prozessors des mobilen Kommunikationsendgeräts 1 ausgeführt sind und in einem Speicher des mobilen Kommunikationsendgeräts 1 gespeichert sind. Dabei können der Prozessor und der Speicher des mobilen Kommunikationsendgeräts 1 fest im mobilen Kommunikationsendgerät 1 integriert sein oder auf einer entfernbar mit dem mobilen Kommunikationsendgerät 1 verbundenen Chipkarte ausgeführt sein, beispielsweise auf einer so genannten SIM-Karte (Subscriber Identity Module). Die funktionalen Module können dem mobilen Kommunikationsendgerät 1 auf einem Computerprogrammprodukt zugeführt werden, das ein computerlesbares Medium mit den Computerprogrammcodemitteln der funktionalen Module umfasst. Der Fachmann versteht, dass die funktionalen Module auch vollständig oder zum Teil hardwaremässig ausgeführt werden können. Wie in der Figur 1 schematisch dargestellt ist, umfassen die funktionalen Module des mobilen Kommunikationsendgeräts 1 ein Steuermodul 11, ein Berechnungsmodul 12, ein Vergleichsmodul 13 sowie ein Komprimierungsmodul 14.

In der Figur 1 bezeichnet das Bezugszeichen 3 eine computerbasierte Betreuungseinheit, welche einen oder mehrere Computer mit jeweils einem oder mehreren Prozessoren umfasst. Die computerbasierte Betreuungseinheit 3 ist über ein Kommunikationsmodul 31 mit dem Mobilfunknetz 2 verbunden. Die computerbasierte Betreuungseinheit 3 umfasst einen Bildschirm 38 zur Darstellung eines emulierten mobilen Kommunikationsendgeräts 30 sowie Bedienungselemente 37 zur Eingabe von Daten und Bedienungsinstruktionen. Die computerbasierte Betreuungseinheit 3 umfasst überdies verschiedene funktionale Module, die vorzugsweise als programmierte Softwaremodule zur Steuerung eines Prozessors der computerbasierten Betreuungseinheit 3 ausgeführt sind und in einem Speicher der computerbasierten Betreuungseinheit 3 gespeichert sind. Die funktionalen Module können der computerbasierten Betreuungseinheit 3 auf einem Computerprogrammprodukt zugeführt werden, das ein computerlesbares Medium mit den Computerprogrammcodemitteln der funktionalen Module umfasst. Der Fachmann versteht, dass die funktionalen Module auch vollständig oder zum Teil hardwaremässig ausgeführt werden können. Wie in der Figur 1 schematisch dargestellt ist, umfassen die funktionalen Module der computerbasierten Betreuungseinheit 3 ein Befehlsmodul 32, einen Emulator 33, ein Berechnungsmodul 34, ein Vergleichsmodul 35 sowie optional ein Dekomprimierungsmodul 36. Der Emulator 33 basiert beispielsweise auf dem Entwicklungs-Kit von Symbian (Symbian ist eine Firma im Besitz der Firmen Ericsson, Nokia, Panasonic, Psion, Samsung Electronics, Siemens and Sony Ericsson), welcher zum Anmeldezeitpunkt im Internet unter der nachfolgenden Adresse beschrieben wurde:
www.symbian.com/developer/techlib/v70docs/SDL_v7.0/doc_source/QuickStart/Emulators.html

In den folgenden Abschnitten wird mit Bezug auf die Figur 2 der Verfahrensablauf bei der Fernbetreuung des mobilen Kommunikationsendgeräts 1 durch die computerbasierte Betreuungseinheit 3 beschrieben. Dabei wird auch auf die Funktionalität der oben angeführten funktionalen Module des mobilen Kommunikationsendgeräts 1 und der computerbasierten Betreuungseinheit 3 eingegangen.

Im Schritt S1 leitet der Teilnehmer mit seinem mobilen Kommunikationsendgerät 1 eine Anfrage zur Fernbetreuung durch die computerbasierte Betreuungseinheit 3 ein. Dabei gibt er mittels der Bedienungselemente 16 entweder eine Rufnummer der computerbasierten Betreuungseinheit 3 ein oder er aktiviert eine entsprechende gespeicherte Rufnummer oder ein entsprechendes Anruf- oder Betreuungsprogramm.

Im Schritt S1' wird basierend auf dem Schritt S1 durch das Kommunikationsmodul 15 zur Fernbetreuung eine Verbindung vom mobilen Kommunikationsendgerät 1 zu der computerbasierten Betreuungseinheit 3 erstellt. Im Schritt S1' werden auch Angaben zur Typenidentifizierung und Konfiguration des mobilen Kommunikationsendgeräts 1 vorzugsweise in einem Datenbeleg an die computerbasierte Betreuungseinheit 3 übermittelt.

Im Schritt S2 wird basierend auf den im Schritt S1' übermittelten Angaben zur Typenidentifizierung und Konfiguration des mobilen Kommunikationsendgeräts 1 durch den Emulator 33 ein zu emulierendes mobiles Kommunikationsendgerät bestimmt. Das zu emulierende mobile Kommunikationsendgerät wird vom Emulator 33 emuliert und auf dem Bildschirm 38 als emuliertes mobiles Kommunikationsendgerät 30 dargestellt. Das zu emulierende mobile Kommunikationsendgerät könnte auch von einer Hilfsperson auf Grund von Angaben gewählt werden, die vom Teilnehmer mündlich über die im Schritt S1' erstellte Verbindung gemacht werden.

Im Schritt S3 werden vom Befehlsmodul 32 Bedienungsinstruktionen zwischengespeichert und an den Emulator 33 geleitet. Die Bedienungsinstruktionen werden entweder automatisch durch das Befehlsmodul 32 definiert, beispielsweise basierend auf gespeicherten Testsequenzen, oder durch eine Hilfsperson mittels der Bedienungselemente 37 manuell eingegeben werden. Falls der Bildschirm 38 berührungsempfindlich ist, können die Bedienungsinstruktionen auch mittels der emulierten Bedienungselemente 37' manuell eingegeben. In einer alternativen Ausführungsvariante werden die Bedienungsinstruktionen vom mobilen Kommunikationsendgerät 1 über das Mobilfunknetz 2 an die computerbasierte Betreuungseinheit 3 übermittelt.

Im Schritt S4 bestimmt der Emulator 3 auf Grund der im Schritt S3 empfangenen Bedienungsinstruktionen den Betriebszustand des zu emulierenden mobilen Kommunikationsendgeräts, das heisst, der Emulator 3 bestimmt den Betriebszustand, der vom zu emulierenden mobilen Kommunikationsendgerät nach der Ausführung der den empfangenen Bedienungsinstruktionen entsprechenden Operation(en) eingenommen wird. Dabei stellt der Emulator 33 insbesondere auf dem Bildschirm 38 den emulierten Bildinhalt 39 dar, der dem Bildinhalt entspricht, der dem Betriebszustand des zu emulierenden mobilen Kommunikationsendgeräts entsprechend auf einer emulierten Anzeige des zu emulierenden mobilen Kommunikationsendgeräts dargestellt wird.

Im Schritt S5 berechnet das Berechnungsmodul 34 eine Prüfsumme des im Schritt S4 emulierten Bildinhalts 39. Die berechnete Prüfsumme wird vom Berechnungsmodul 34 zwischengespeichert. Die Prüfsumme wird beispielsweise gemäss der CRC-Technik (Cyclic Redundancy Check) berechnet. Typischerweise wird CRC als Standardverfahren zur Fehlerdetektion in Datenübermittlungen verwendet, es eignet sich jedoch auch für die Berechnung der im vorliegenden Verfahren verwendeten Prüfsumme.

Im Schritt S6 werden die im Schritt S3 gespeicherten Bedienungsinstruktionen von der computerbasierten Betreuungseinheit 3 mittels des Kommunikationsmoduls 31 über das Mobilfunknetz 2 an das mobile Kommunikationsendgerät 1 übermittelt. Im Schritt S6 wird zudem die im Schritt S5 berechnete Prüfsumme des emulierten Bildinhalts 39 von der computerbasierten Betreuungseinheit 3 an das mobile Kommunikationsendgerät 1 übermittelt. In einer alternativen Ausführungsvariante werden die Bedienungsinstruktionen entweder automatisch durch das Steuermodul 11 definiert oder durch den Teilnehmer mittels der Bedienungselemente 16 manuell eingegeben und anschliessend, wie im Zusammenhang mit dem Schritt S3 bereits erwähnt, über das Mobilfunknetz 2 an die computerbasierte Betreuungseinheit 3 übermittelt.

Im Schritt S7 wird das mobile Kommunikationsendgerät 1 durch das Steuermodul 11 entsprechend der im Schritt S6 übermittelten Bedienungsinstruktion gesteuert. Das heisst, im Schritt S7 führt das Steuermodul 11 entsprechend der im Schritt S6 übermittelten Bedienungsinstruktion im mobilen Kommunikationsendgerät 1 eine oder mehrere Operationen aus. Entsprechend dem Resultat der Operation und dem Betriebszustand des mobilen Kommunikationsendgeräts 1 wird auf der Anzeige 18 ein neuer Bildinhalt 19 dargestellt.

Im Schritt S8 berechnet das Berechnungsmodul 12 eine Prüfsumme des im Schritt S7 dargestellten Bildinhalts 19.

Im Schritt S9 vergleicht das Vergleichsmodul die im Schritt S8 berechnete Prüfsumme des Bildinhalts 19 mit der im Schritt S6 empfangenen Prüfsumme des emulierten Bildinhalts 39. Falls die Prüfsummen übereinstimmen, das heisst, falls der Bildinhalt 19 mit dem emulierten Bildinhalt 39 übereinstimmt, übermittelt das Vergleichsmodul im Schritt S10 eine positive Bestätigung an die computerbasierte Betreuungseinheit 3 und es wird vom mobilen Kommunikationsendgerät 1 auf weitere Bedienungsinstruktionen gewartet und dann im Schritt S7 fortgefahren. Andernfalls, wenn die Prüfsummen nicht übereinstimmen, das heisst, wenn der Bildinhalt 19 nicht mit dem emulierten Bildinhalt 39 übereinstimmt, stellt das Komprimierungsmodul 14 im Schritt S11 mindestens ein Teilgebiet des Bildinhalts 19 zur Übermittlung an die computerbasierte Betreuungseinheit 3 bereit. Das Teilgebiet umfasst beispielsweise einen oder mehrere Bereiche des Bildinhalts, in dem oder in denen Unterschiede zwischen dem Bildinhalt 19 und dem emulierten Bildinhalt 39 bestehen, was auf Grund der Prüfsummen bestimmt werden kann. Es ist zudem möglich, dass das Komprimierungsmodul 14 den zu übermittelnden Bildinhalt 19, respektive die zu übermittelnden Teilgebiete, komprimiert. Beispielsweise können dargestellte Textinformationen als Text anstatt als Bildinformationen bereitgestellt werden und/oder es können weitere Bildkompressionsalgorithmen verwendet werden.

Im Schritt S12 werden die im Schritt S11 bereitgestellten Daten betreffend den Bildinhalt 19 mittels des Kommunikationsmoduls 15 in einer negativen Bestätigung über das Mobilfunknetz 2 an die computerbasierte Betreuungseinheit 3 übermittelt. Danach wird vom mobilen Kommunikationsendgerät 1 auf weitere Bedienungsinstruktionen gewartet und dann im Schritt S7 fortgefahren.

Im Schritt S13 wird in der computerbasierten Betreuungseinheit 3 vom Befehlsmodul 32 untersucht, ob vom mobilen Kommunikationsendgerät 1 als Antwort auf die im Schritt S6 übermittelte Bedienungsinstruktion und Prüfsumme im Schritt S10 respektive S12 eine positive Bestätigung oder eine negative Bestätigung mit Bildinhalt empfangen wurde. Falls in der computerbasierten Betreuungseinheit 3 eine positive Bestätigung empfangen wurde, wird vom Befehlsmodul 32 auf weitere Bedienungsinstruktionen gewartet und dann im Schritt S3 fortgefahren. Andernfalls, wenn eine negative Bestätigung mit Bildinhalt empfangen wurde, werden die empfangenen Daten im Schritt S14 nötigenfalls durch das Dekomprimierungsmodul 36 dekomprimiert und die dekomprimierten, dem Bildinhalt 19 entsprechenden Bildinhalte respektive Teilgebiete der entsprechenden Bildinhalte werden auf dem Bildschirm 38 dargestellt. Zusätzlich oder als Alternative können auf dem Bildschirm 38, beispielsweise im emulierten Bildinhalt 39, Unterschiede zu den Bildinhalten 19 angezeigt werden.

Auf Grund der Unterschiede zwischen den Bildinhalten 19 auf der Anzeige 18 des mobilen Kommunikationsendgeräts 1 und den emulierten Bildinhalten 39 auf dem Bildschirm 38 der computerbasierten Betreuungseinheit 3 können durch ein nicht dargestelltes Expertenmodul in der computerbasierten Betreuungseinheit 3 oder durch eine Hilfsperson Eigenheiten in der Konfiguration und/oder Fehlverhalten des mobilen Kommunikationsendgeräts 1 bestimmt werden und Lösungsvorschläge generiert werden.

## Patentansprüche

1. System zur Fernbetreuung von Teilnehmern in einem Mobilfunknetz (2), umfassend:
mindestens ein mobiles Kommunikationsendgerät (1) mit einer Anzeige (18) mit einem ersten Bildinhalt (19) welcher dem Betriebszustand des mobilen Kommunikationsgeräts (1) entspricht, und
eine computerbasierte Betreuungseinheit (3), die über das Mobilfunknetz (2) mit dem mindestens einen mobilen Kommunikationsendgerät (1) verbindbar ist,
**dadurch gekennzeichnet,**
**dass** die Betreuungseinheit (3) einen Emulator (33) zur Emulation des mobilen Kommunikationsendgeräts (1) umfasst, wobei der Emulator (33) eingerichtet ist, einen dem Betriebszustand des emulierten mobilen Kommunikationsendgeräts (1) entsprechenden zweiten Bildinhalt (39) zu emulieren
**dass** das System Mittel zur Übermittlung von Bedienungsinstruktionen über das Mobilfunknetz (2) zwischen der Betreuungseinheit (3) und dem mobilen Kommunikationsendgerät (1) umfasst,
**dass** das mobile Kommunikationsendgerät (1) Mittel zur Steuerung des mobilen Kommunikationsendgeräts (1) entsprechend den über das Mobilfunknetz (2) übermittelten Bedienungsinstruktionen umfasst, und
**dass** das System Mittel zur Darstellung eines Bildinhalts (39) in der Betreuungseinheit (3) umfasst, der dem Bildinhalt (19) entspricht, der auf der Anzeige (18) des mobilen Kommunikationsendgeräts (1) dargestellt ist.

2. System nach Anspruch 1, **dadurch gekennzeichnet, dass** das mobile Kommunikationsendgerät (1) Mittel zur Berechnung einer ersten Prüfsumme des auf der Anzeige (18) dem Betriebszustand des mobilen Kommunikationsendgeräts (1) entsprechend dargestellten ersten Bildinhalts (19) umfasst, dass die Betreuungseinheit (3) Mittel zur Berechnung einer zweiten Prüfsumme des emulierten zweiten Bildinhalts (39) umfasst, und dass das System Mittel umfasst zum Vergleichen der ersten Prüfsumme mit der zweiten Prüfsumme und zum Übermitteln von mindestens einem Teilgebiet des ersten Bildinhalts (19) vom mobilen Kommunikationsendgerät (1) über das Mobilfunknetz (2) an die Betreuungseinheit (3), wenn die erste Prüfsumme und die zweite Prüfsumme nicht übereinstimmen.

3. System nach Anspruch 2, **dadurch gekennzeichnet, dass** das mobile Kommunikationsendgerät (1) eingerichtet ist, die Berechnung der ersten Prüfsumme auf Grund einer Bedienungsinstruktion durchzuführen, die über Bedienungselemente (16) des mobilen Kommunikationsendgeräts (1) empfangen wurde.

4. System nach Anspruch 2, **dadurch gekennzeichnet, dass** das mobile Kommunikationsendgerät (1) eingerichtet ist, die Berechnung der ersten Prüfsumme auf Grund einer Bedienungsinstruktion durchzuführen, die im mobilen Kommunikationsendgerät (1) über das Mobilfunknetz (2) von der Betreuungseinheit (3) empfangen wurde.

5. System nach einem der Ansprüche 2 bis 4, **dadurch gekennzeichnet, dass** die Betreuungseinheit (3) eingerichtet ist, die berechnete zweite Prüfsumme über das Mobilfunknetz (2) an das mobile Kommunikationsendgerät (1) zu übermitteln, dass die Mittel zum Vergleichen der ersten Prüfsumme und der zweiten Prüfsumme im mobilen Kommunikationsendgerät (1) angeordnet sind, und dass das mobile Kommunikationsendgerät (1) eingerichtet ist, den ersten Bildinhalt (19) über das Mobilfunknetz (2) an die Betreuungseinheit (3) zu übermitteln, wenn die erste Prüfsumme und die zweite Prüfsumme nicht übereinstimmen.

6. System nach einem der Ansprüche 2 bis 5, **dadurch gekennzeichnet, dass** die Mittel zum Übermitteln von mindestens einem Teilgebiet des ersten Bildinhalts (19) eingerichtet sind, das mindestens eine Teilgebiet des ersten Bildinhalts (19) komprimiert zu übermitteln.

7. Verfahren zur Fernbetreuung von Teilnehmern in einem Mobilfunknetz (2), in welchem Verfahren mindestens ein mobiles Kommunikationsendgerät (1) über das Mobilfunknetz (2) mit einer computerbasierten Betreuungseinheit (3) verbunden wird (S1'), **gekennzeichnet durch**,
Übermittlung (S6) von Bedienungsinstruktionen über das Mobilfunknetz (2) zwischen der Betreuungseinheit (3) und dem mobilen Kommunikationsendgerät (1),
Steuerung (S7) des mobilen Kommunikationsendgeräts (1) entsprechend den über das Mobilfunknetz (2) übermittelten Bedienungsinstruktionen, und
Darstellung (S4, S14) eines Bildinhalts in der Betreuungseinheit (3), der dem Bildinhalt entspricht, der auf einer Anzeige (18) des mobilen Kommunikationsendgeräts (1) dargestellt ist.

8. Verfahren nach Anspruch 7, **gekennzeichnet durch** Berechnung (SS8) einer ersten Prüfsumme eines auf der Anzeige (18) des mobilen Kommunikationsendgeräts (1) dem Betriebszustand des mobilen Kommunikationsendgeräts (1) entsprechend dargestellten ersten Bildinhalts (19) im mobilen Kommunikationsendgerät (1), Emulation (S4) des mindestens einen mobilen Kommunikationsendgeräts (1) in der Betreuungseinheit (3), wobei ein dem Betriebszustand des emulierten mobilen Kommunikationsendgeräts (1) entsprechender zweiter Bildinhalt emuliert wird, Berechnung (S5) einer zweiten Prüfsumme des emulierten zweiten Bildinhalts (39) in der Betreuungseinheit (3), und Vergleichen (S9) der ersten Prüfsumme mit der zweiten Prüfsumme und Übermitteln (S12) von mindestens einem Teilgebiet des ersten Bildinhalts vom mobilen Kommunikationsendgerät (1) über das Mobilfunknetz (2) an die Betreuungseinheit (3), wenn die erste Prüfsumme und die zweite Prüfsumme nicht übereinstimmen.

9. Verfahren nach Anspruch 8, **dadurch gekennzeichnet, dass** die Berechnung (S8) der ersten Prüfsumme im mobilen Kommunikationsendgerät (1) auf Grund einer Bedienungsinstruktion durchgeführt wird, die über Bedienungselemente des mobilen Kommunikationsendgeräts (1) empfangen wurde.

10. Verfahren nach Anspruch 8, **dadurch gekennzeichnet, dass** die Berechnung (S8) der ersten Prüfsumme im mobilen Kommunikationsendgerät (1) auf Grund einer Bedienungsinstruktion durchgeführt wird, die im mobilen Kommunikationsendgerät (1) über das Mobilfunknetz (2) von der Betreuungseinheit (3) empfangen wurde.

11. Verfahren nach einem der Ansprüche 8 bis 10, **dadurch gekennzeichnet, dass** die berechnete zweite Prüfsumme von der Betreuungseinheit (3) über das Mobilfunknetz (2) an das mobile Kommunikationsendgerät (1) übermittelt wird (S6), dass die erste Prüfsumme und die zweite Prüfsumme im mobilen Kommunikationsendgerät (1) verglichen werden (S9), und dass der erste Bildinhalt vom mobilen Kommunikationsendgerät (1) über das Mobilfunknetz (2) an die Betreuungseinheit (3) übermittelt wird (S12), wenn die erste Prüfsumme und die zweite Prüfsumme nicht übereinstimmen.

12. Verfahren nach einem der Ansprüche 8 bis 11, **dadurch gekennzeichnet, dass** das mindestens eine Teilgebiet des ersten Bildinhalts (19) komprimiert übermittelt wird.

13. Computerprogrammprodukt umfassend: ein computerlesbares Medium mit darin enthaltenen Computerprogrammcodemitteln zur Steuerung eines oder mehrerer Prozessoren einer computerbasierten Betreuungseinheit (3) zur Fernbetreuung von Teilnehmern in einem Mobilfunknetz (2), welche über das Mobilfunknetz (2) mit mindestens einem mobilen Kommunikationsendgerät (1) eines Teilnehmers verbindbar ist, derart,
dass die Betreuungseinheit (3) Bedienungsinstruktionen über das Mobilfunknetz (2) an das mobile Kommunikationsendgerät (1) übermittelt (S6) oder vom mobilen Kommunikationsendgerät (1) empfängt, und
dass die Betreuungseinheit (3) einen Bildinhalt (39) darstellt (S4, S14), der dem Bildinhalt (19) entspricht, der auf einer Anzeige (18) des mobilen Kommunikationsendgeräts (1) dargestellt ist.

14. Computerprogrammprodukt nach Anspruch 13, **dadurch gekennzeichnet, dass** es weitere Computerprogrammcodemittel umfasst, die die Prozessoren der computerbasierten Betreuungseinheit (3) derart steuern, dass die Betreuungseinheit (3) mindestens ein mobiles Kommunikationsendgerät (1) emuliert (S4), wobei ein dem Betriebszustand des emulierten mobilen Kommunikationsendgeräts (1) entsprechender Bildinhalt emuliert wird, und dass die Betreuungseinheit (3) eine Prüfsumme des emulierten Bildinhalts berechnet (S5).

15. Computerprogrammprodukt nach Anspruch 14, **dadurch gekennzeichnet, dass** es weitere Computerprogrammcodemittel umfasst, die die Prozessoren der computerbasierten Betreuungseinheit (3) derart steuern, dass die Betreuungseinheit (3) die berechnete Prüfsumme über das Mobilfunknetz (2) an das mobile Kommunikationsendgerät (1) übermittelt (S6), und dass die Betreuungseinheit (3) den auf der Anzeige (18) des mobilen Kommunikationsendgeräts (1) dargestellten Bildinhalt (19) vom mobilen Kommunikationsendgerät (1) über das Mobilfunknetz (2) empfängt.

16. Computerprogrammprodukt nach Anspruch 14, **dadurch gekennzeichnet, dass** es weitere Computerprogrammcodemittel umfasst, die die Prozessoren der computerbasierten Betreuungseinheit (3) derart steuern, dass die Betreuungseinheit (3) eine im mobilen Kommunikationsendgerät (1) berechnete Prüfsumme über das Mobilfunknetz (2) empfängt, dass die Betreuungseinheit (3) die empfangene Prüfsumme mit der berechneten Prüfsumme des emulierten Bildinhalts vergleicht und eine Bildübermittlungsinstruktion zur Anforderung des auf der Anzeige (18) des mobilen Kommunikationsendgeräts (1) dargestellten Bildinhalts (19) über das Mobilfunknetz (2) an das mobile Kommunikationsendgerät (1) übermittelt, wenn die empfangene Prüfsumme und die berechnete Prüfsumme des emulierten Bildinhalts nicht übereinstimmen, und dass die Betreuungseinheit (3) den angeforderten Bildinhalt vom mobilen Kommunikationsendgerät (1) über das Mobilfunknetz (2) empfängt.

17. Computerprogrammprodukt umfassend: ein computerlesbares Medium mit darin enthaltenen Computerprogrammcodemitteln zur Steuerung eines oder mehrerer Prozessoren eines mobilen Kommunikationsendgeräts (1), welches über ein Mobilfunknetz (2) mit einer computerbasierten Betreuungseinheit (3) zur Fernbetreuung von Teilnehmern im Mobilfunknetz (2) verbindbar ist, derart,
dass das mobile Kommunikationsendgerät (1) über das Mobilfunknetz (2) Bedienungsinstruktionen von der Betreuungseinheit (3) empfängt oder an die Betreuungseinheit (3) übermittelt,
dass das mobile Kommunikationsendgerät (1) entsprechend den über das Mobilfunknetz (2) ausgetauschten Bedienungsinstruktionen einen Betriebszustand einnimmt (S7), und
dass das mobile Kommunikationsendgerät (1) Informationen über das Mobilfunknetz (2) an die Betreuungseinheit (3) übermittelt (S12), die vom Bildinhalt (19) abhängig sind, der auf einer Anzeige (18) des mobilen Kommunikationsendgeräts (1) dargestellt ist.

18. Computerprogrammprodukt nach Anspruch 17, **dadurch gekennzeichnet, dass** es weitere Computerprogrammcodemittel umfasst, die die Prozessoren des mobilen Kommunikationsendgeräts (1) derart steuern, dass das mobile Kommunikationsendgerät (1) eine erste Prüfsumme eines auf der Anzeige (18) des mobilen Kommunikationsendgeräts (1) dem Betriebszustand des mobilen Kommunikationsendgeräts (1) entsprechend dargestellten Bildinhalts (19) berechnet (S18), dass das mobile Kommunikationsendgerät (1) von der Betreuungseinheit (3) eine zweite Prüfsumme über das Mobilfunknetz (2) empfängt, dass das mobile Kommunikationsendgerät (1) die berechnete erste Prüfsumme und die empfangene zweite Prüfsumme miteinander vergleicht (S9), und dass das mobile Kommunikationsendgerät (1) mindestens ein Teilgebiet des auf der Anzeige (18) des mobilen Kommunikationsendgeräts (1) dargestellten Bildinhalts (19) über das Mobilfunknetz (2) an die Betreuungseinheit (3) übermittelt (S12), wenn die erste Prüfsumme und die zweite Prüfsumme nicht übereinstimmen.

19. Computerprogrammprodukt nach Anspruch 18, **dadurch gekennzeichnet, dass** es weitere Computerprogrammcodemittel umfasst, die die Prozessoren des mobilen Kommunikationsendgeräts (1) derart steuern, dass das mobile Kommunikationsendgerät (1) die Berechnung (S8) der ersten Prüfsumme auf Grund einer Bedienungsinstruktion durchführt, die über Bedienungselemente (16) des mobilen Kommunikationsendgeräts (1) empfangen wurde.

20. Computerprogrammprodukt nach Anspruch 18, **dadurch gekennzeichnet, dass** es weitere Computerprogrammcodemittel umfasst, die die Prozessoren des mobilen Kommunikationsendgeräts (1) derart steuern, dass das mobile Kommunikationsendgerät (1) die Berechnung (S8) der ersten Prüfsumme auf Grund einer Bedienungsinstruktion durchführt, die im mobilen Kommunikationsendgerät (1) über das Mobilfunknetz (2) von der Betreuungseinheit (3) empfangen wurde.

## Claims

1. System for remote support of subscribers in a mobile radio network (2), comprising:
at least one mobile communication terminal (1) with a display (18) with a first image content (19) corresponding to the operating state of the mobile communication device (1), and
a computer-based support unit (3), which is connectible to the at least one mobile communication terminal (1) via the mobile radio network (2),
**characterised**
**in that** the support unit (3) comprises an emulator (33) for emulation of the mobile communication terminal (1), the emulator (33) being set up to emulate a second image content (39) corresponding to the operating state of the emulated mobile communication terminal (1),
**in that** the system comprises means for transmitting operating instructions between the support unit (3) and the mobile communication terminal (1) over the mobile radio network (2),
**in that** the mobile communication terminal (1) comprises means of controlling the mobile communication terminal (1) in accordance with the operating instructions transmitted over the mobile radio network (2), and
**in that** the system comprises means of presentation of an image content (39) in the support unit (3), which image content corresponds to the image content (19) which is shown on the display (18) of the mobile communication terminal (1).

2. System according to claim 1, **characterised in that** the mobile communication terminal (1) comprises means of calculation of a first check sum for the first image content (19), shown on the display (18) in a way corresponding to the operating state of the mobile communication terminal (1), **in that** the support unit (3) comprises means of calculation of a second check sum for the emulated second image content (39), and **in that** the system comprises means of comparing the first check sum with the second check sum and of transmitting at least one partial area of the first image content (19) from the mobile communication terminal (1) over the mobile radio network (2) to the support unit (3) if the first check sum and the second check sum do not match.

3. System according to claim 2, **characterised in that** the mobile communication terminal is set up to carry out the calculation of the first check sum on the basis of an operating instruction which was received via operating elements (16) of the mobile communication terminal (1).

4. System according to claim 2, **characterised in that** the mobile communication terminal is set up to carry out the calculation of the first check sum on the basis of an operating instruction which was received in the mobile communication terminal (1) over the mobile radio network (2) from the support unit (3).

5. System according to one of the claims 2 to 4, **characterised in that** the support unit (3) is set up to transmit the calculated second check sum over the mobile radio network (2) to the mobile communication terminal (1), **in that** the means of comparison of the first check sum and of the second check sum are disposed in the mobile communication terminal (1), and **in that** the mobile communication terminal (1) is set up to transmit the first image content (19) over the mobile radio network (2) to the support unit (3) if the first check sum and the second check sum do not match.

6. System according to one of the claims 2 to 5, **characterised in that** the means of transmitting at least one partial area of the first image content (19) are set up to transmit the at least one partial area of the first image content (19) in a compressed way.

7. Method for remote support of subscribers in a mobile radio network (2), in which method at least one mobile communication terminal (1) is connected (S1') over the mobile radio network (2) to a computer-based support unit (3), **characterised by**
transmission (S6) of operating instructions over the mobile radio network (2) between the support unit (3) and the mobile communication terminal (1),
control (S7) of the mobile communication terminal (1) in accordance with the operating instructions transmitted over the mobile radio network (2), and
presentation (S4, S14) of an image content in the support unit (3), which content corresponds to the image content that is shown on a display (18) of the mobile communication terminal (1).

8. Method according to claim 7, **characterised by** calculation (SS8) in the mobile communication terminal (1) of a first check sum of a first image content (19), shown on the display (18) of the mobile communication terminal (1) in a way corresponding to the operating state of the mobile communication terminal (1), emulation (S4) of the at least one mobile communication terminal (1), in the support unit (3), a second image content corresponding to the operating state of the emulated mobile communication terminal (1) being emulated, calculation (S5) of a second check sum of the emulated second image content (39) in the support unit (3), and comparison (S9) of the first check sum with the second check sum, and transmission (S12) of at least one partial area of the first image content from the mobile communication terminal (1) over the mobile radio network (2) to the support unit (3), if the first check sum and the second check sum do not match.

9. Method according to claim 8, **characterised in that** the calculation (S8) of the first check sum is carried out in the mobile communication terminal (1) based on an operating instruction which was received via operating elements of the mobile communication terminal (1).

10. Method according to claim 8, **characterised in that** the calculation (S8) of the first check sum is carried out in the mobile communication terminal (1) based on an operating instruction which was received in the mobile communication terminal (1) from the support unit (3) via the mobile radio network (2).

11. Method according to one of the claims 8 to 10, **characterised in that** the calculated second check sum is transmitted (S6) from the support unit (3) over the mobile radio network (2) to the mobile communication terminal (1), **in that** the check sum and the second check sum are compared (S9) in the mobile communication terminal (1), and **in that** the first image content is transmitted (S12) from the mobile communication terminal (1) over the mobile radio network (2) to the support unit (3), if the first check sum and the second check sum do not match.

12. Method according to one of the claims 8 to 11, **characterised in that** the at least one partial area of the first image content (19) is transmitted in a compressed way.

13. Computer program product comprising: a computer-readable medium with computer program code means contained therein for control of one or more processors of a computer-based support unit (3) for remote support of subscribers in a mobile radio network (2), which unit is connectible via the mobile radio network (2) to at least one mobile communication terminal (1) of a subscriber in such a way
that the support unit (3) transmits (S6) operating instructions over the mobile radio network (2) to the mobile communication terminal (1) or receives them from the mobile communication terminal (1), and
that the support unit (3) presents (S4, S14) an image content (39) corresponding to the image content (19) which is shown on a display (18) of the mobile communication terminal (1).

14. Computer program product according to claim 13, **characterised in that** it comprises further computer program code means which control the processors of the computer-based support unit (3) such that the support unit (3) emulates (S4) at least one mobile communication terminal (1), an image content being emulated corresponding to the operating state of the emulated mobile communication terminal (1), and that the support unit (3) calculates (S5) a check sum for the emulated image content.

15. Computer program product according to claim 14, **characterised in that** it comprises further computer program code means, which control the processors of the computer-based support unit (3) in such a way that the support unit (3) transmits (S6) the calculated check sum over the mobile radio network (2) to the mobile communication terminal (1), and **in that** the support unit (3) receives from the mobile communication terminal (1) over the mobile radio network (2) the image content (19) shown on the display (18) of the mobile communication terminal (1).

16. Computer program product according to claim 14, **characterised in that** it comprises further computer program code means which control the processors of the computer-based support unit (3) in such a way that the support unit (3) receives over the mobile radio network (2), a check sum calculated in the mobile communication terminal (1), **in that** the support unit (3) compares the received check sum with the calculated check sum of the emulated image content, and transmits over the mobile radio network (2) to the mobile communication terminal (1) an image transmission instruction to request the image content (19) shown on the display (18) of the mobile communication terminal (1), if the received check sum and the calculated check sum for the emulated image content do not match, and **in that** the support unit (3) receives the requested image content from the mobile communication terminal (1) via the mobile radio network (2).

17. Computer program product comprising: a computer-readable medium with computer program code means contained therein for controlling one or more processors of a mobile communication terminal (1) which is connectible, via a mobile radio network (2), to a computer-based support unit (3) for remote support of subscribers in the mobile radio network (2), in such a way
that the mobile communication terminal (1) receives operating instructions from the support unit (3) via the mobile radio network (2), or transmits them to the support unit (3),
that the mobile communication terminal (1) assumes an operating state (S7) in accordance with the operating instructions exchanged over the mobile radio network (2), and
that the mobile communication terminal (1) transmits (S12) data over the mobile radio network (2) to the support unit (3), which data are dependent on the image content (19) that is shown on a display (18) of the mobile communication terminal (1).

18. Computer program product according to claim 17, **characterised in that** it comprises further computer program code means, which control the processors of the mobile communication terminal (1) in such a way that the mobile communication terminal (1) calculates (S18) a first check sum for an image content (19), shown on the display (18) of the mobile communication terminal (1) in a way corresponding to the operating state of the mobile communication terminal (1), **in that** the mobile communication terminal (1) receives a second check sum from the support unit (3) via the mobile radio network (2), **in that** the mobile communication terminal (1) compares the calculated first check sum and the received second check sum with one another (S9), and **in that** the mobile communication terminal (1) transmits (S12) at least one partial area of the image content (19) shown on the display (18) of the mobile communication terminal (1) over the mobile radio network (2) to the support unit (3) if the first check sum and the second check sum do not match.

19. Computer program product according to claim 18, **characterised in that** it comprises further computer program code means, which control the processors of the mobile communication terminal (1) in such a way that the mobile communication terminal (1) carries out the calculation (S8) of the first check sum based on an operating instruction which was received via operating elements (16) of the mobile communication terminal (1).

20. Computer program product according to claim 18, **characterised in that** it comprises further computer program code means, which control the processors of the mobile communication terminal (1) in such a way that the mobile communication terminal (1) carries out the calculation (S8) of the first check sum based on an operating instruction which was received in the mobile communication terminal (1) from the support unit (3) via the mobile radio network (2).

## Revendications

1. Système pour l'assistance à distance d'abonnés dans un réseau mobile (2), comprenant :
au moins un terminal de communication (1) avec un écran (18) présentant un premier contenu d'image (19) qui correspond à l'état de service du terminal de communication mobile (1), et
une unité d'assistance informatisée (3) qui peut être reliée par le réseau mobile (2) à au moins un terminal de communication (1),
**caractérisé en ce que**
l'unité d'assistance (3) comprend un émulateur (33) pour l'émulation du terminal de communication (1), l'émulateur (33) étant agencé pour émuler un second contenu d'image (39) correspondant à l'état de service du terminal mobile émulé (1),
**en ce que** le système comprend des moyens pour la transmission d'instructions de manipulation par le réseau mobile (2) entre l'unité d'assistance (3) et le terminal de communication mobile (1),
**en ce que** le terminal de communication mobile (1) comprend des moyens pour la commande du terminal de communication mobile (1) en fonction des instructions de manipulation transmises par le réseau mobile (2) et
**en ce que** le système comprend des moyens pour la représentation d'un contenu d'image (39) dans l'unité d'assistance (3) qui correspond au contenu d'image (19) qui est représenté sur l'écran (18) du terminal mobile de communication (1).

2. Système selon la revendication 1, **caractérisé en ce que** le terminal mobile de communication (1) comprend des moyens pour le calcul d'une première somme de contrôle du premier contenu d'image (19) représenté sur l'écran (18) en fonction de l'état de service du terminal de communication (1), **en ce que** l'unité d'assistance (3) comprend des moyens pour le calcul d'une seconde somme de contrôle du second contenu d'image émulé (39) et **en ce que** le moyen comporte des moyens pour la comparaison de la première somme de contrôle avec la seconde somme de contrôle et pour la transmission d'au moins une zone partielle du premier contenu d'image (19) au terminal mobile de communication (1) par le réseau mobile (2) à l'unité d'assistance (3) quand la première somme de contrôle et la seconde somme de contrôle ne concorde pas.

3. Système selon la revendication 2, **caractérisé en ce que** le terminal de communication mobile (1) est agencé de manière à exécuter le calcul de la première somme de contrôle sur la base d'une instruction de manipulation qui a été reçue par les éléments de manipulation (16) du terminal mobile-de communication (1).

4. Système selon la revendication 2, **caractérisé en ce que** le terminal de communication mobile (1) est configuré de manière à effectuer le calcul de la première somme de contrôle sur la base d'une instruction de manipulation qui a été reçue dans le terminal mobile de communication (1) via le réseau mobile (2) par l'unité d'assistance (3).

5. Système selon l'une des revendications 2 à 4, **caractérisé en ce que** l'unité d'assistance (3) est paramétrée pour transmettre la seconde somme de contrôle calculée par le réseau mobile (2) au terminal de communication mobile (1), **en ce que** les moyens pour la comparaison de la première somme de contrôle et de la seconde somme de contrôle sont disposés dans le terminal de communication mobile (1) et **en ce que** le terminal de communication mobile (1) est paramétré pour transmettre le premier contenu d'image (19) par le réseau mobile (2) à l'unité d'assistance (3), quand la première somme de contrôle et la seconde somme de contrôle ne concordent pas.

6. Système selon l'une des revendications 2 à 5, **caractérisé en ce que** les moyens pour la transmission d'au moins une zone partielle du premier contenu d'image (19) sont conçus pour transmettre au moins une zone partielle du premier contenu d'image (19) de manière comprimée.

7. Procédé d'assistance à distance d'abonnés dans un réseau mobile (2), procédé dans lequel au moins un terminal de communication mobile (1) est relié (S1') par le réseau mobile (2) à une unité d'assistance informatisée (3), **caractérisé par**
la transmission (S6) d'instructions de manipulation par le réseau mobile (2) entre l'unité d'assistance (3) et le terminal de communication mobile (1),
la commande (S7) du terminal de communication mobile (1) en fonction des instructions de manipulation transmises par le réseau mobile (2) et
la représentation (S4, S14) d'un contenu d'image dans l'unité d'assistance (3) qui correspond au contenu d'image qui est représenté sur l'écran (18) du terminal de communication mobile (1).

8. Procédé selon la revendication 7, **caractérisé par** le calcul (SS8) d'une première somme de contrôle d'un premier contenu d'image (19) représenté sur l'écran (18) du terminal de communication mobile (1) en fonction de l'état de service du terminal de communication mobile (1), dans le terminal de communication mobile (1), l'émulation (S4) d'au moins un terminal de communication mobile (1) dans l'unité d'assistance (3), un second contenu d'image qui correspond à l'état de service du terminal de communication mobile (1) émulé étant émulé, le calcul (S5) d'une seconde somme de contrôle du second contenu d'image émulé (39) dans l'unité d'assistance (3), et la comparaison (S9) de la première somme de contrôle à la seconde somme de contrôle ainsi que la transmission (S12) d'au moins une zone partielle du premier contenu d'image par le terminal de communication mobile (1) via le réseau mobile (2) à l'unité d'assistance (3), quand la première somme de contrôle et la seconde somme de contrôle ne coïncident pas.

9. Procédé selon la revendication 8, **caractérisé en ce que** le calcul (S8) de la première somme de contrôle dans le terminal de communication mobile (1) est effectué sur la base d'un instruction de manipulation qui a été reçue par des éléments de manipulation du terminal de communication mobile (1).

10. Procédé selon la revendication 8, **caractérisé en ce que** le calcul (S8) de la première somme de contrôle dans le terminal de communication mobile (1) est réalisé sur la base d'une instruction de manipulation qui a été reçue dans le terminal de communication mobile (1) via le réseau mobile (2) par l'unité d'assistance (3),

11. Procédé selon l'une des revendications 8 à 10, **caractérisé en ce que** la seconde somme de contrôle calculée est transmise (S6)par l'unité d'assistance (3), via le réseau mobile (2) dans le terminal de communication mobile (1), **en ce que** la première somme de contrôle et la seconde somme de contrôle sont comparées (S9) dans le terminal de communication mobile (1), et **en ce que** le premier contenu d'image est transmis (S12) par le terminal de communication mobile (1) via le réseau mobile (2) à l'unité d'assistance (3), quand la première somme de contrôle et la seconde somme de contrôle ne coïncident pas.

12. Procédé selon l'une des revendications 8 à 11, **caractérisé en ce qu'**au moins une zone partielle du premier contenu d'image (19) est transmise comprimée.

13. Produit de programme informatique comprenant : un support lisible par ordinateur avec des moyens de codage de programme informatique pour la commande d'un ou de plusieurs processeurs d'une unité d'assistance informatisée (3) pour l'assistance à distance d'abonnés dans un réseau mobile (2), laquelle est reliée via le réseau mobile (2) à au moins un terminal de communication mobile (1) d'un abonné, de sorte que
l'unité d'assistance (3) transmet (S6) des instructions de manipulation via le réseau mobile (2) au terminal de communication mobile (1) ou les reçoit du terminal de communication mobile (1), et
en ce que l'unité d'assistance (3) représente (S4, S14) un contenu d'image qui correspond au contenu d'image (19) qui est représenté sur l'écran (18) du terminal de communication mobile (1).

14. Produit de programme informatique selon la revendication 13, **caractérisé en ce qu'**il comprend d'autres moyens de codage de programme informatique qui commandent les processeurs de l'unité d'assistance informatisée (3) de sorte que l'unité d'assistance (3) émule (S4) au moins un terminal de communication mobile (1), un contenu d'image correspondant à l'état de service du terminal de communication mobile (1) émulé étant émulé et **en ce que** l'unité d'assistance (3) calcule (S5) une somme de contrôle du contenu d'image émulé.

15. Produit de programme informatique selon la revendication 14, **caractérisé en ce que en ce qu'**il comprend d'autres moyens de codage de programme informatique qui commandent les processeurs de l'unité d'assistance (3) informatisée de sorte que l'unité d'assistance (3) transmet (S6) la somme de contrôle calculée via le réseau mobile (2) au terminal de communication mobile (1), et **en ce que** l'unité d'assistance (3) reçoit le contenu d'image (19) représenté sur l'écran du terminal de communication mobile (1) par le terminal de communication mobile (1) via le réseau mobile (2).

16. Produit de programme informatique selon la revendication 14, **caractérisé en ce qu'**il comprend d'autres moyens de codage de programme informatique qui commandent les processeurs de l'unité d'assistance (3) informatisée de sorte que l'unité d'assistance (3) reçoit une somme de contrôle calculée dans le terminal de communication mobile (1) via le réseau mobile (2), **en ce que** l'unité d'assistance (3), compare la somme de contrôle reçue à la somme de contrôle calculée du contenu d'image émulé et transmet une instruction de transmission d'image pour la demande du contenu d'image (19) représenté sur l'écran (18) du terminal de communication mobile (1), via le réseau mobile (2) au terminal de communication mobile (1), quand la somme de contrôle reçue et la somme de contrôle calculée du contenu d'image émulé ne correspondent pas et **en ce que** l'unité d'assistance (3) reçoit du terminal de communication mobile (1) le contenu d'image demandé via le réseau mobile (2).

17. Produit de programme informatisé comprenant un support lisible par ordinateur contenant des moyens de codage de programme informatique pour la commande d'un ou de plusieurs processeurs d'un terminal de communication mobile (1), qui peut être relié via un réseau mobile (2) à une unité d'assistance (3), informatisée pour l'assistance à distance d'abonnés dans le réseau mobile (2), de sorte
que le terminal de communication mobile (1) reçoit via le réseau mobile (2) des instructions de manipulation par l'unité d'assistance (3) ou transmet à l'unité d'assistance (3),
en ce que le terminal de communication mobile (1) prend (S7) un état de service en fonction des instructions de manipulations échangées via le réseau mobile (2), et
en ce que le terminal de communication mobile (1) transmet des informations via le réseau mobile (2) à l'unité d'assistance (3), qui dépendebt du contenu d'image (19) qui est représenté sur un écran (18) du terminal de communication mobile (1).

18. Produit de programme informatique selon la revendication 17, **caractérisé en ce qu'**il comprend plusieurs moyens de codage de programme informatisé qui commandent les processeurs du terminal de communication mobile (1) de sorte que le terminal de communication mobile (1) calcule (S18) une première somme de contrôle d'un contenu d'image (19) représenté sur l'écran (18) du terminal de communication mobile (1) et correspondant à l'état de service du terminal de communication mobile (1), **en ce que** le terminal de communication mobile (1) reçoit de l'unité d'assistance (3), une seconde somme de contrôle via le réseau mobile (2), **en ce que** le terminal de communication mobile (1) compare (S9) la première somme de contrôle calculée et la seconde somme de contrôle reçue entre elles, et **en ce que** le terminal de communication mobile (1) transmet (S12) au moins une zone partielle du contenu d'image (19) représenté sur l'écran (18) du terminal de communication mobile (1), via le réseau mobile (2) à l'unité d'assistance (3), si la première somme de contrôle et la seconde somme de contrôle ne coïncident pas.

19. Produit de programme informatique selon la revendication 18, **caractérisé en ce qu'**il comprend d'autres moyens de codage de programme informatisé qui commandent les processeurs du terminal de communication mobile (1) de sorte que le terminal de communication mobile (1) exécute le calcul (S8) de la première somme de contrôle sur la base d'une instruction de manipulation qui a été reçue par des éléments de manipulation (16) du terminal de communication mobile (1).

20. Produit de programme informatique selon la revendication 18, **caractérisé en ce qu'**il comprend d'autres moyens de codage de programme informatisé qui commandent les processeurs du terminal de communication mobile (1) de sorte que le terminal de communication mobile (1) exécute le calcul (S8) de la première somme de contrôle sur la base d'une instruction de manipulation qui a été reçue par l'unité d'assistance (3) via le réseau mobile (2) dans le terminal mobile de communication (1).
